# EUROPEAN PATENT SPECIFICATION

(11) **EP 3 616 520 B1**
(45) Date of publication and mention of the grant of the patent: **08.11.2023**
(21) Application number: 19193658.2
(22) Date of filing: 27.08.2019
(51) Int. Cl.: A21B 7/00, A47J 43/046, A47J 43/07

(54) **AUTOMATIC BREAD MAKER**
AUTOMATISCHE BROTBACKMASCHINE
MACHINE À PAIN AUTOMATIQUE

(30) Priority: 30.08.2018 JP 2018160928
(43) Date of publication of application: 04.03.2020
(73) Proprietor: Panasonic Intellectual Property Management Co., Ltd., Osaka-shi, Osaka 540-6207 (JP)
(72) Inventor: NAKAYAMA, Atsuo, Osaka-shi,, Osaka 540-6207 (JP); SAGAWA, Masayuki, Osaka-shi,, Osaka 540-6207 (JP); OTSUKI, Kazuya, Osaka-shi,, Osaka 540-6207 (JP)
(74) Representative: Grünecker Patent- und Rechtsanwälte PartG mbB

(56) References cited:
- JP-A- 2015 204 861
- JP-B2- 2 687 383
- US-A1- 2012 325 803

## Description

### 1. Technical Field

The present disclosure relates to an automatic bread maker used in ordinary households.

### 2. Description of the Related Art

There are known automatic bread makers with different structures (refer to Patent Unexamined Publication No. 2013-63244 for example). A typical automatic bread maker has a bottomed, cylindrical heater case defining a heating chamber, inside the body of the bread maker. The body has a lid assembly covering the top opening of the heater case. Inside the heating chamber, a kneading container for accommodating ingredients is detachably disposed.

At the lower part of the heating chamber, a heater for heating the kneading container is disposed. Inside the kneading container, a kneading paddle for rotating inside the kneading container to stir ingredients is detachably disposed. The body has a motor for generating a driving force on the kneading paddle, which is transmitted to the kneading paddle through a transmission mechanism such as a pulley and belt.

Document JP 2 687 383 B2 relates to an automatic bread maker comprising a frame provided in a main body, a heating tank equipped with a heater, and a heat insulating material on the outer periphery thereof. A kneading vessel having a kneading blade is detachably mounted in the tank, and the kneading blade is driven by a belt and a pulley. The kneading vessel is provided in the bread maker, and an inner lid is provided for closing an upper opening of the bread maker. A far-infrared reflecting film is formed on an inner surface of the baking container and inside the inner lid.

Document JP 2015 204 861 A relates to an automatic bread production tool capable of producing hard bread. The automatic bread production tool comprises a first heater for heating whole baking chamber; and a second heater for heating a lower part of a bread container.

Document US 2012 / 325 803 A1 relates to an electrothermal cooker including an upper opening, a heating case, a lid body for the upper opening, a lower heater for heating a lower portion of the heating chamber, an upper heater for heating an upper portion of the heating chamber, and a check window. The lid body includes an inner lid, beneath an outer lid, which form the upper portion of the heating chamber. The upper heater is mounted to the lid body. The outer lid and inner lid define an opening for the check window. A portion of the lower side edge of the outer lid forms an engaging portion under the check window, and an upper portion of the inner lid forms a contact support for an outer peripheral edge of the check window, engaged with the engaging portion while surrounding this outer peripheral edge portion from under.

### SUMMARY

Bread is food highly subject to personal preference. Some people like bread with thin skin; others, thick. Some people like bread with a soft texture; others, hard.

To make bread with a hard texture, a thermal dose to bread dough needs to be increased. To do so, a heater more powerful than normal ones is simply required.

A too powerful heater, however, can cause the side and bottom surfaces of bread dough in contact with the kneading container to be burned. As the power of the heater becomes stronger, the thermal dose supplied to the side and bottom surfaces of the dough in contact with the kneading container greatly increases compared to that not in contact. This leads to imbalance between the thermal dose supplied from the top and that from the bottom, which is likely to cause difference in the baking degree.

To avoid such a problem, one way is to continue heating bread dough for a long time at a temperature that does not burn the side and bottom surfaces of the dough.

This way, however, can dry the entire bread dough, possibly resulting in bread with a dry texture. Accordingly, an existing automatic bread maker has room for improvement from the viewpoint of baking bread with a hard texture more favorably.

An automatic bread maker according to the present invention comprises an automatic bread maker comprising: a body; a heater case having a bottomed and cylindrical shape, the heater case being disposed inside the body and defining a heating chamber; a kneading container disposed inside the heating chamber for accommodating ingredients; a heater disposed at a lower part of the heating chamber for heating the kneading container; a kneading paddle for stirring the ingredients by rotating in the kneading container; a drive unit for rotating the kneading paddle; and a lid assembly including an outer lid exposed outside, a thermal insulation plate having outside dimensions larger than the kneading container in a planar view and disposed inside the outer lid, and an inner lid having heat reflectivity higher than heat reflectivity of the thermal insulation plate and disposed inside the thermal insulation plate, wherein the lid assembly covers a top opening of the heater case, characterized by an outer air layer provided between the thermal insulation plate and the outer lid, an inner air layer provided between the inner lid and the thermal insulation plate, the inner air layer being hermetically sealed, and a communicating hole communicatively connecting a space inside the body and moreover outside the heater case with the outer air layer, at a part positioned outside the top opening of the heater case in a planar view.

An automatic bread maker according to the present disclosure produces bread with a hard texture more favorably.

### BRIEF DESCRIPTION OF DRAWINGS

FIG. 1 is a perspective view of an automatic bread maker according to an exemplary embodiment of the present disclosure, viewed from a diagonal front.
FIG. 2 is a perspective view of the automatic bread maker, viewed from a diagonal back.
FIG. 3 is a anteroposterior longitudinal sectional view of the automatic bread maker.
FIG. 4 is an exploded perspective view of the lid assembly, viewed from a diagonal back.
FIG. 5 is an exploded perspective view of the lid assembly, viewed from a diagonal front.
FIG. 6 is a perspective view of the automatic bread maker with the lid assembly open.
FIG. 7 is a transversely longitudinal sectional view of the automatic bread maker.
FIG. 8 is a perspective view of the steam cylinder, viewed from a diagonal bottom.
FIG. 9 is a perspective view of a modified example of how the inner lid and the thermal insulation plate are attached.
FIG. 10 is a perspective view of a modified example of the lid assembly.
FIG. 11 is a perspective view of the configuration of the heater case, inner lid, and thermal insulation plate in the modified example of FIG. 10.

### DETAILED DESCRIPTION OF PREFERRED EMBODIMENT

The inventors, in order to produce bread with a hard texture more favorably, have achieved the following novel findings through close examination.

The inventors have found that increasing the heat reflectivity of the inner lid facing the heating chamber causes heat from the heater toward the top surface of bread dough to reflect, thereby enhancing the efficiency of heating the top surface of the dough.

The inventors have found that placing a thermal insulation plate between the outer lid exposed outside and the inner lid facing the heating chamber increases the heat retaining property of the lid assembly, thereby further enhancing the efficiency of heating the top surface of the dough.

The inventors have found that increasing the heat reflectivity of the inner lid, as well as placing a thermal insulation plate between the outer lid and the inner lid, significantly improves the balance of a thermal dose supplied to bread dough from the top and that from the bottom, thereby favorably producing bread with desirable hardness on the whole. These novel findings have led the inventors to the following invention.

An automatic bread maker according to the first aspect of the present disclosure includes a body; a heater case with a bottomed cylindrical shape; a kneading container; a heater; a kneading paddle; a drive unit; and a lid assembly.

The heater case is disposed inside the body to define a heating chamber. The kneading container is disposed inside the heating chamber to accommodate ingredients. The heater is disposed at a lower part of the heating chamber to heat the kneading container. The kneading paddle stirs ingredients by rotating inside the kneading container. The drive unit rotates the kneading paddle.

The lid assembly includes an outer lid exposed outside, a thermal insulation plate disposed inside the outer lid, and an inner lid disposed inside the thermal insulation plate, and covers the top opening of the heater case. The thermal insulation plate has outside dimensions larger than the kneading container in a planar view. The inner lid has heat reflectivity higher than the thermal insulation plate.

An automatic bread maker according to the second aspect of the present disclosure, besides those of the first aspect, has an outer air layer between the thermal insulation plate and the outer lid; an inner air layer, between the inner lid and the thermal insulation plate.

In an automatic bread maker according to the third aspect of the present disclosure, besides those of the second aspect, the inner air layer is hermetically sealed.

An automatic bread maker according to the fourth aspect of the present disclosure, besides those of the second aspect, has a communicating hole communicatively connecting the space inside the body and moreover outside the heater case with the outer air layer, at a position where at least one of the inner lid and thermal insulation plate is positioned outside the top opening of the heater case in a planar view.

In an automatic bread maker according to the fifth aspect of the present disclosure, besides those of the second aspect, the lid assembly has a steam cylinder for discharging steam inside the heating chamber to the outside, and the steam cylinder has an air outlet for discharging air in the outer air layer to the outside of the body.

In an automatic bread maker according to the sixth aspect of the present disclosure, besides those of the fifth aspect, the steam cylinder is placed at a position deviated toward the outer periphery of the top opening of the heater case in a planar view.

In an automatic bread maker according to the seventh aspect of the present disclosure, besides those of the first aspect, the inner lid is fixed onto the outer lid either directly or indirectly.

In an automatic bread maker according to the eighth aspect of the present disclosure, besides those of the first aspect, the inner lid is detachably attached.

In an automatic bread maker according to the ninth aspect of the present disclosure, besides those of the first aspect, the inner lid comprises metallic material the inner surface of which is mirror-surface treated.

In an automatic bread maker according to the tenth aspect of the present disclosure, besides those of the first aspect, the thermal insulation plate comprises a plated steel plate; the inner lid comprises stainless steel.

Hereinafter, a description is made of an automatic bread maker according to an exemplary embodiment of the present disclosure with reference to the attached drawings. In the following drawings, a substantially identical component is given the same reference number, and a duplicate description may be omitted.

In the embodiment, a term representing a direction such as "upper," "lower," "front," and "back" is used assuming a state of ordinary use for convenience of description. These words, however, do not limit the configuration of an automatic bread maker according to the embodiment.

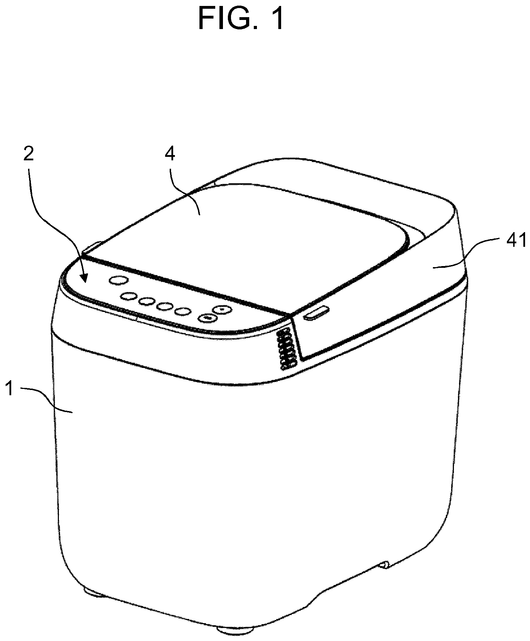

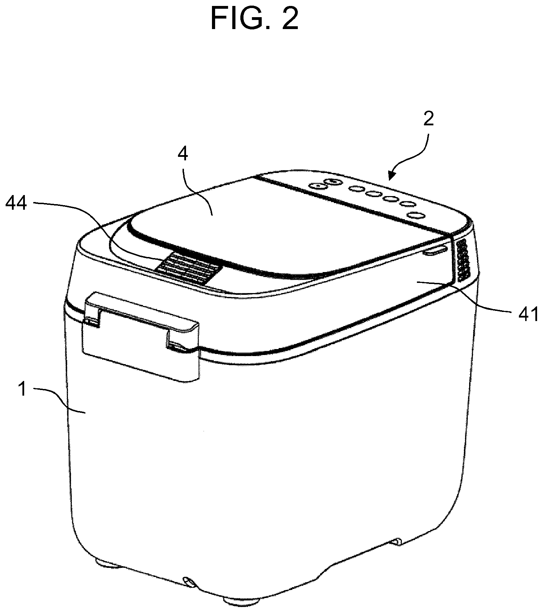

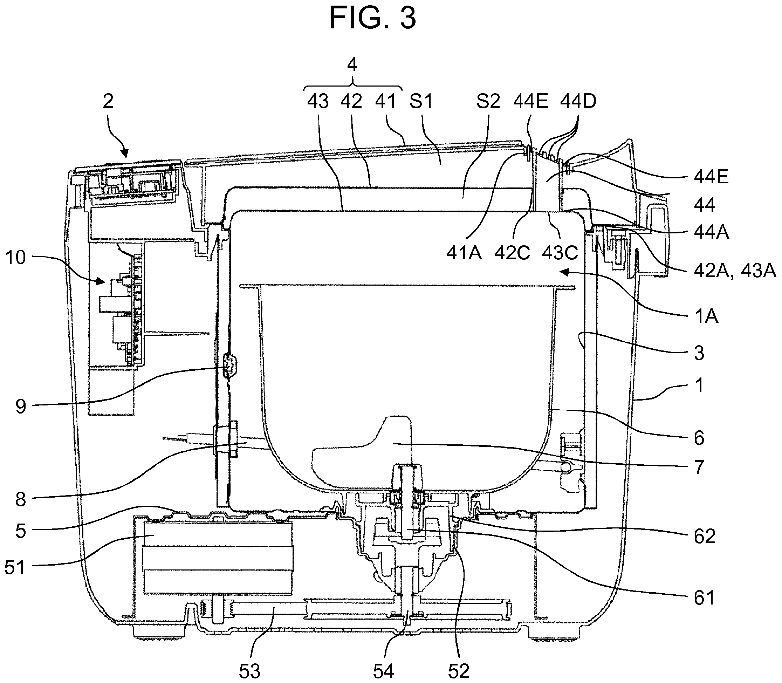

FIG. 1 is a perspective view of the automatic bread maker according to the embodiment, viewed from a diagonal front. FIG. 2 is a perspective view of the automatic bread maker, viewed from a diagonal back. FIG. 3 is a anteroposterior longitudinal sectional view of the automatic bread maker.

As shown in FIG.s 1 through 3, the automatic bread maker according to the embodiment includes body 1 having lid assembly 4 on its top. At the top front part of body 1, there is operation unit 2 disposed that includes various electronic components.

Operation unit 2 has a selecting unit and a display unit. A user, by operating the selecting unit, selects a desired cooking course from some courses, starts and stops various types of operations, and sets the timer. The display unit displays various types of information such as that selected with the selecting unit.

As shown in FIG. 3, there is heater case 3 that has a bottomed cylindrical shape and defines heating chamber 1A, inside body 1. Lid assembly 4 is attached rotatably centering around a hinge (unillustrated) disposed at the top rear part (the top right part of FIG. 3) of body 1 so as to cover the top opening of heater case 3. The configuration of lid assembly 4 is described later.

As shown in FIG. 3, there is chassis 5 disposed at a lower part of body 1. There are motor 51 and container support base 52 that are attached to chassis 5. Container support base 52 has a bottomed cylindrical shape.

Motor 51 is a drive unit for generating a driving force. Motor 51 rotates lower connector 54 rotatably supported by container support base 52 through transmission mechanism 53 including a pulley and a belt. Lower connector 54 engages with upper connector 61 rotatably supported by the bottom of kneading container 6.

Kneading container 6 accommodates ingredients such as flour, water, and yeast, and is detachably disposed in heating chamber 1A. There is substantially cylindrical kneading container base 62 detachably disposed on the outer bottom surface of kneading container 6. Kneading container base 62 is bayonet-bound to container support base 52.

Kneading container base 62 bayonet-bound to container support base 52 causes lower connector 54 to be engaged with upper connector 61, resulting in kneading container 6 supported inside heating chamber 1A. Releasing this bayonet binding disengages lower connector 54 from upper connector 61, allowing kneading container 6 to be removed from heating chamber 1A.

Upper connector 61 is supported by kneading container base 62 rotatably around the axis so that the front end projects upward from the bottom. There is kneading paddle 7 for stirring ingredients accommodated in kneading container 6, detachably attached at the front end of upper connector 61.

When a driving force from motor 51 is transmitted to transmission mechanism 53 to rotate lower connector 54 and upper connector 61, kneading paddle 7 rotates. Kneading paddle 7 rotating inside kneading container 6 causes ingredients inside kneading container 6 to be stirred.

There is heater 8 for heating kneading container 6, disposed at a lower part of heating chamber 1A. Heater 8 is disposed so as to surround kneading container 6 placed on container support base 52 leaving a given space. In this embodiment, heater 8 is disposed lower than the top of kneading paddle 7. Heater 8 is a sheath heater for example.

Heating chamber 1A includes temperature sensor 9 sensing temperature inside heating chamber 1A. Temperature sensor 9 is disposed slightly apart from heater 8 to allow sensing an average temperature inside heating chamber 1A. In this embodiment, temperature sensor 9 is disposed at a vertically intermediate position of heating chamber 1A.

There is control unit 10 for controlling each component, disposed under operation unit 2. Control unit 10 stores cooking sequences corresponding to some cooking courses. A cooking sequence means the program of a cooking procedure defining values such as energized time of heater 8, target temperature, and rotation speed of kneading paddle 7, and their orders, in a cooking step such as kneading, rest, fermentation, and baking. Control unit 10 controls motor 51 and heater 8 on the basis of the cooking sequence corresponding to a cooking course selected with the selecting unit and temperature sensed by temperature sensor 9.

Next, a more detailed description is made of the structure of lid assembly 4.

As shown in FIG. 3, lid assembly 4 includes outer lid 41 exposed outside, thermal insulation plate 42 disposed inside outer lid 41, and inner lid 43 disposed inside thermal insulation plate 42.

There is outer air layer S1 provided between thermal insulation plate 42 and outer lid 41. There is inner air layer S2 provided between inner lid 43 and thermal insulation plate 42. Accordingly, lid assembly 4 has a double-lid structure, which enhances the heat retaining property of lid assembly 4. In this embodiment, inner air layer S2 is a hermetically sealed space enclosed by thermal insulation plate 42 and inner lid 43. Inner air layer S2 has a thickness of 5 mm to 10 mm for example.

Thermal insulation plate 42 and inner lid 43 have outside dimensions larger than kneading container 6 in a planar view (lid assembly 4 is viewed from above).

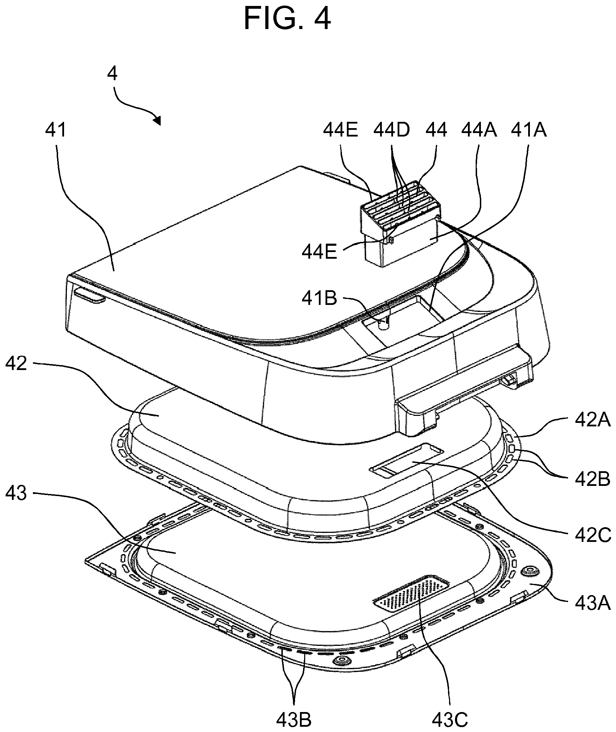

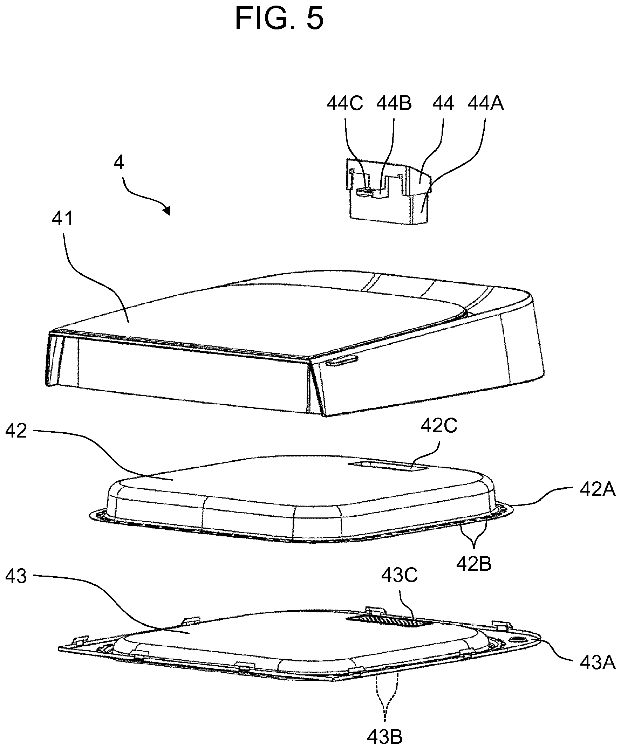

FIG. 4 is an exploded perspective view of lid assembly 4 viewed from a diagonal back. FIG. 5 is an exploded perspective view of lid assembly 4 viewed from a diagonal front. As shown in FIGs. 4 and 5, thermal insulation plate 42 and inner lid 43 have a shape of a shallow dish concave upward. Thermal insulation plate 42 is recessed more than inner lid 43. Accordingly, outer periphery 42A of thermal insulation plate 42 overlapped with outer periphery 43A of inner lid 43 forms hermetically sealed inner air layer S2 between thermal insulation plate 42 and inner lid 43.

As shown in FIG. 3, outer periphery 43A of inner lid 43 and outer periphery 42A of thermal insulation plate 42 are positioned outside the top opening of heater case 3 when lid assembly 4 is closed in a planar view. In this embodiment, thermal insulation plate 42 is attached to inner lid 43 by swaging part of outer periphery 42A with part of outer periphery 43A of inner lid 43. Inner lid 43 is fixed onto outer lid 41 either directly or indirectly.

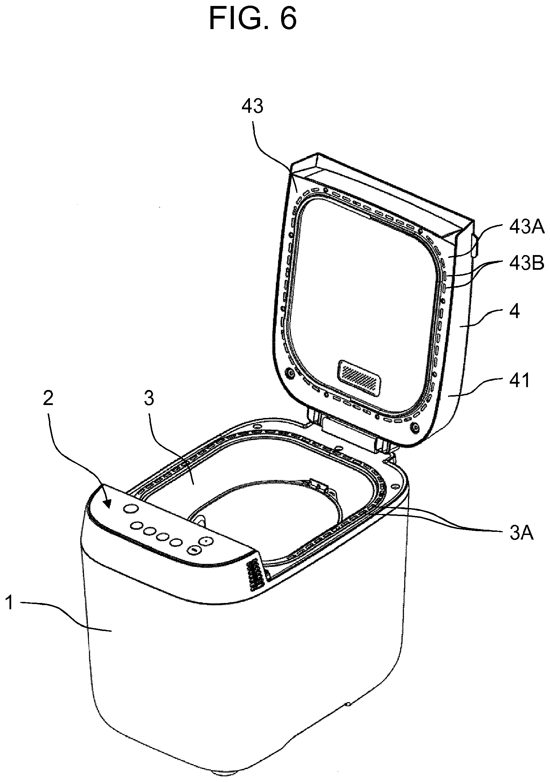

FIG. 6 is a perspective view of an automatic bread maker according to this embodiment with lid assembly 4 open. As shown in FIG. 6, there are two or more communicating holes 3A communicatively connecting the space inside body 1 and moreover outside heater case 3 with the outside of body 1, provided around the top opening of heater case 3. Outer periphery 43A of inner lid 43 has two or more communicating holes 43B. When lid assembly 4 is closed, each of communicating holes 3A faces each of communicating holes 43B.

In the same way, outer periphery 42A of thermal insulation plate 42 has two or more communicating holes 42B. Each of communicating holes 42B faces each of communicating holes 43B as shown in FIGs. 4 and 5.

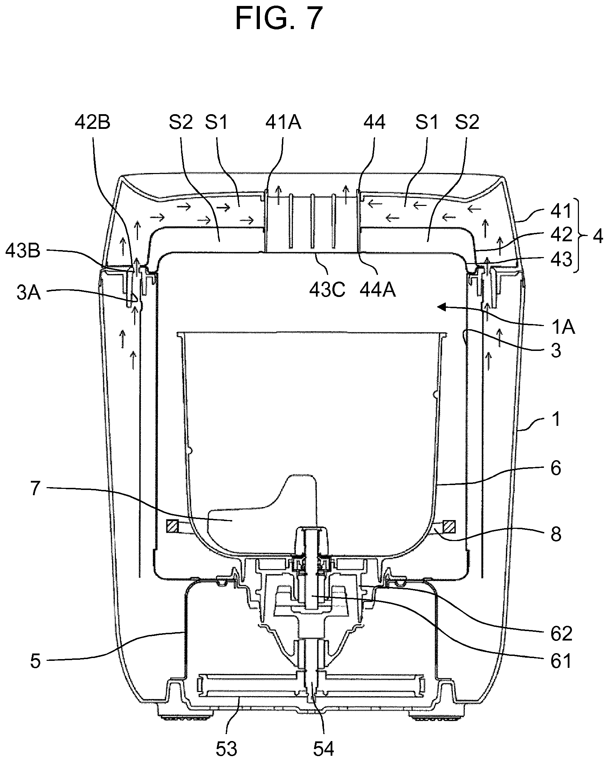

FIG. 7 is a transversely longitudinal sectional view of an automatic bread maker according to this embodiment. As shown by the arrows in FIG. 7, when lid assembly 4 is closed, the space inside body 1 and moreover outside heater case 3 communicatively connects with outer air layer S1 through communicating holes 3A, 43B, and 42B. This allows hot air generated around heater case 3 to flow into outer air layer S1.

As shown in FIG. 3, lid assembly 4 includes steam cylinder 44 detachably disposed to discharge steam inside heating chamber 1A to the outside of body 1. Steam cylinder 44 is placed at a position deviated from the center of the top opening of heater case 3 toward the outer periphery in a planar view. This configuration provides higher heat retaining property of outer air layer S1 than the case where steam cylinder 44 is placed at the center of the top opening of heater case 3 in a planar view. This suppresses a decrease of temperature inside inner air layer S2.

Steam cylinder 44 includes cylindrical member 44A that penetrates through hole 41A in outer lid 41 and through hole 42C in thermal insulation plate 42, and contacts inner lid 43.

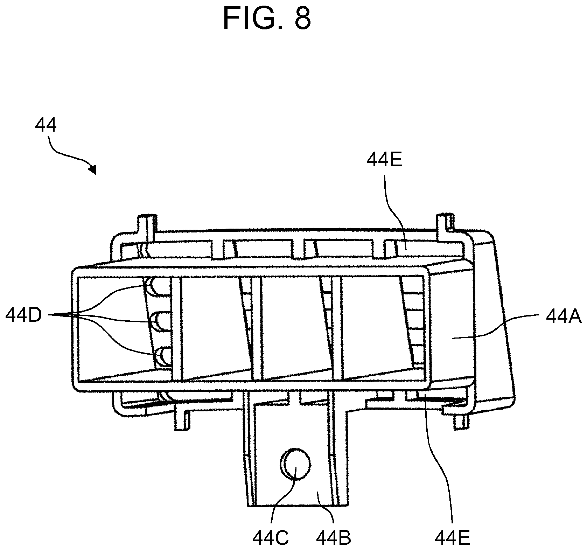

FIG. 8 is a perspective view of steam cylinder 44 viewed from a diagonal bottom. As shown in FIGs. 4, 5, and 8, steam cylinder 44 is detachably attached to outer lid 41 by inserting projection 41B on outer lid 41 into insert-through hole 44C in projecting piece 44B laterally projecting.

Inner lid 43 has two or more steam openings 43C surrounded by cylindrical member 44A. Steam generated in heating chamber 1A enters the inside of steam cylinder 44 through steam opening 43C, and is discharged to the outside of body 1 through steam opening 44D shaped from some slits provided at the top end of steam cylinder 44.

As shown in FIGs. 3 and 8, steam cylinder 44 has a pair of air outlets 44E provided so as to sandwich two or more steam openings 44D. Air in outer air layer S1 is discharged to the outside of body 1 through air outlets 44E.

Inner lid 43 has heat reflectivity higher than thermal insulation plate 42. Inner lid 43 is made of metallic material the inner surface of which is mirror-surface treated. For example, thermal insulation plate 42 is made of a plated steel plate; inner lid 43, stainless steel.

According to this embodiment, inner lid 43 reflecting heat from heater 8 toward the top surface of bread dough increases the efficiency of heating the top surface of the dough.

In this embodiment, there is thermal insulation plate 42 disposed between outer lid 41 and inner lid 43. This increases the heat retaining property of lid assembly 4, thereby further enhancing the efficiency of heating the top surface of the dough.

In this embodiment, placing thermal insulation plate 42 between outer lid 41 and inner lid 43 with high heat reflectivity improves the balance of the thermal doses supplied to bread dough from the top and that from the bottom. Concretely, this configuration raises the temperature at the top surface of the dough by approximately 15°C. This favorably produces bread with desirable hardness on the whole.

In this embodiment, there is outer air layer S1 provided between thermal insulation plate 42 and outer lid 41; inner air layer S2, between inner lid 43 and thermal insulation plate 42. Lid assembly 4 provided with double air layers increases the heat retaining property of the top surface of bread dough, thereby further improving the balance of a thermal dose supplied to the dough from the top and that from the bottom.

In this embodiment, there is formed hermetically sealed inner air layer S2. This configuration keeps the temperature in inner air layer S2 higher (e.g., approximately 200°C). This allows raising the temperature at the top surface of bread dough to approximately 160°C for example. This further improves the balance of a thermal dose supplied to the dough from the top and that from the bottom.

In this embodiment, the space inside body 1 and moreover outside heater case 3 communicatively connects with outer air layer S1 through communicating holes 42B and 43B. This configuration allows hot air generated around heater case 3 to flow into outer air layer S1 to raise the temperature inside outer air layer S1 to approximately 130°C for example.

This suppresses a decrease of temperature inside inner air layer S2, which increases the heat retaining property of the top surface of bread dough, thereby further improving the balance of a thermal dose supplied to the dough from the top and that from the bottom. Outer air layer S1 interposed between inner air layer S2 and the outside of body 1 suppresses an increase of temperature at outer lid 41.

In this embodiment, lid assembly 4 has steam cylinder 44 for discharging steam inside heating chamber 1A to the outside of body 1. Steam cylinder 44 has air outlets 44E for discharging air in outer air layer S1 to the outside of body 1. With this configuration, steam inside heating chamber 1A and air in outer air layer S1 is discharged to the outside of body 1 through one hole provided in outer lid 41. This increases the heat retaining property of outer air layer S1, which suppresses a decrease of temperature inside inner air layer S2.

In this embodiment, steam cylinder 44 is provided at a position deviated toward the outer periphery of the top opening of heater case 3 in a planar view. This configuration provides higher heat retaining property of outer air layer S1 than the case where steam cylinder 44 is provided at the center of the top opening of heater case 3 in a planar view. This suppresses a decrease of temperature inside inner air layer S2.

Here, the reason for this is described. If steam cylinder 44 is placed at the center of the top opening of heater case 3 in a planar view, air in outer air layer S1 is discharged to the outside most efficiently. This lowers the temperature in outer air layer S1. The temperature in inner air layer S2 decreases due to heat exchange between outer air layer S1 and inner air layer S2.

In this embodiment, however, air in outer air layer S1 is discharged to the outside less efficiently than the case where steam cylinder 44 is placed at the center of the top opening of heater case 3, due to pressure loss. This suppresses a decrease of the temperature in outer air layer S1. Consequently, heat exchange between outer air layer S1 and inner air layer S2 is suppressed, and so is a decrease of the temperature in inner air layer S2.

The present disclosure can be embodied in various aspects besides the above-described embodiment. In the embodiment, inner lid 43 is fixed onto outer lid 41 either directly or indirectly for example. Inner lid 43, however, may be detachably attached to outer lid 41.

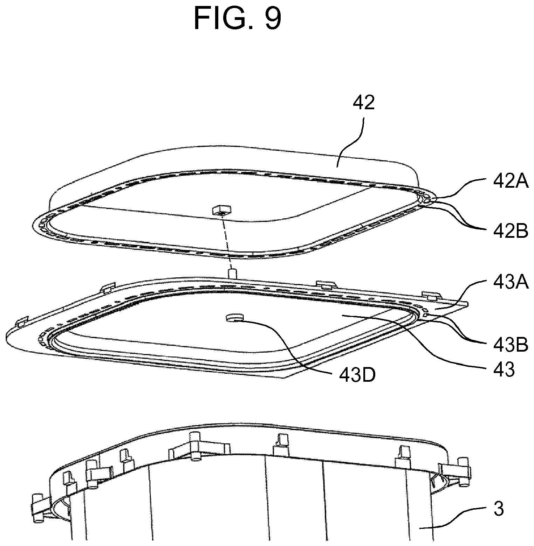

FIG. 9 is a perspective view of a modified example of how the inner lid and the thermal insulation plate are attached. As shown in FIG. 9, inner lid 43 is detachably attached to thermal insulation plate 42 with fastening member 43D such as a screw. Thermal insulation plate 42 is fixed onto outer lid 41 either directly or indirectly. This configuration, to produce bread with a soft texture, suppresses excessive heating of the top surface of bread dough by removing inner lid 43.

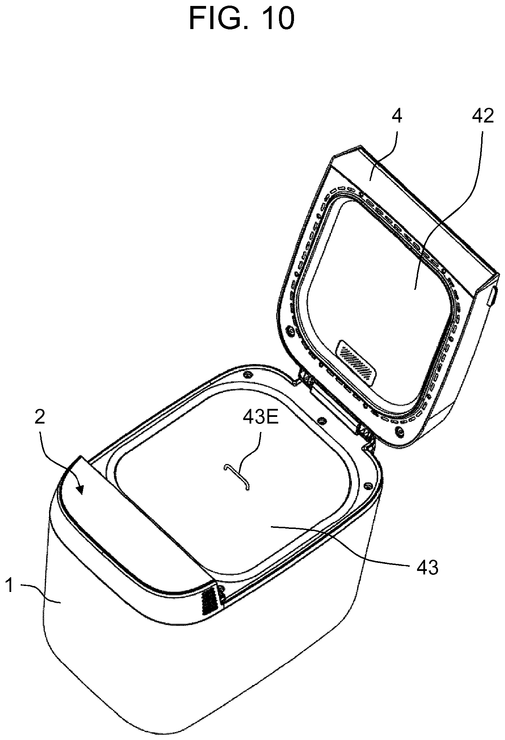

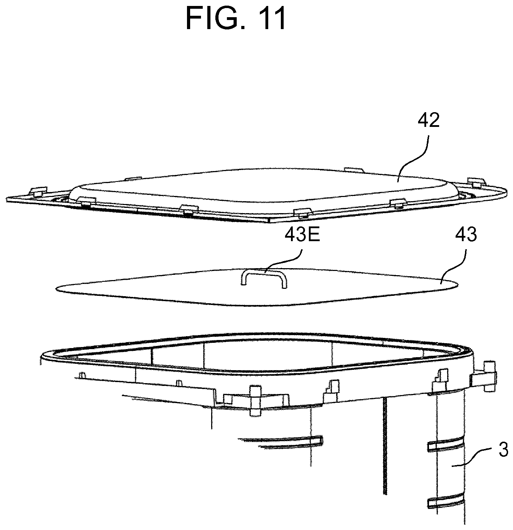

FIG. 10 is a perspective view of a modified example of lid assembly 4. FIG. 11 is a perspective view of the configuration of heater case 3, inner lid 43, and thermal insulation plate 42 in the modified example of FIG. 10.

As shown in FIGs. 10 and 11, inner lid 43 may be separate from outer lid 41 and thermal insulation plate 42, where there may be handle 43E provided on the top surface of inner lid 43.

In the above-described embodiment, there is outer air layer S1 provided between thermal insulation plate 42 and outer lid 41; inner air layer S2, between inner lid 43 and thermal insulation plate 42.

In the above-described embodiment, there is communicating hole 42B provided at outer periphery 42A of thermal insulation plate 42; communicating hole 43B, at outer periphery 43A of inner lid 43. However, one of outer peripheries 42A and 43A does not need to have a part positioned outside the top opening of heater case 3 in a planar view. In this case, it is simply required that a communicating hole is provided at either one of outer peripheries 42A and 43A.

## Claims

1. An automatic bread maker comprising:
a body (1);
a heater case (3) having a bottomed and cylindrical shape, the heater case (3) being disposed inside the body (1) and defining a heating chamber (1A);
a kneading container (6) disposed inside the heating chamber (1A) for accommodating ingredients;
a heater (8) disposed at a lower part of the heating chamber (1A) for heating the kneading container (6);
a kneading paddle (7) for stirring the ingredients by rotating in the kneading container (6);
a drive unit for rotating the kneading paddle (7); and
a lid assembly (4) including
an outer lid (41) exposed outside,
a thermal insulation plate (42) having outside dimensions larger than the kneading container (6) in a planar view and disposed inside the outer lid (41), and
an inner lid (43) having heat reflectivity higher than heat reflectivity of the thermal insulation plate (42) and disposed inside the thermal insulation plate (42),
wherein the lid assembly (4) covers a top opening of the heater case (3),
**characterized by**
an outer air layer (S1) provided between the thermal insulation plate (42) and the outer lid (41),
an inner air layer (S2) provided between the inner lid (43) and the thermal insulation plate (42),
the inner air layer (S2) being hermetically sealed, and
a communicating hole (3A) communicatively connecting a space inside the body (1) and moreover outside the heater case (3) with the outer air layer (S1), at a part positioned outside the top opening of the heater case (3) in a planar view.

2. The automatic bread maker of claim 1, wherein the lid assembly (4) has a steam cylinder (44) for discharging steam inside the heating chamber (1A) to an outside of the body (1), the steam cylinder (44) having an air outlet (44E) for discharging air in the outer air layer (S1) to the outside.

3. The automatic bread maker of claim 2, wherein the steam cylinder (44) is provided at a position deviated toward an outer periphery of the top opening of the heater case (3) in a planar view.

4. The automatic bread maker of claim 1, wherein the inner lid (43) is fixed to the outer lid (41) either directly or indirectly.

5. The automatic bread maker of claim 1, wherein the inner lid (43) is detachably attached to the outer lid (41).

6. The automatic bread maker of claim 1, wherein the inner lid (43) comprises metallic material an inner surface of which is mirror-surface treated.

7. The automatic bread maker of claim 1, wherein the thermal insulation plate (42) comprises a plated steel plate, and the inner lid (43) comprises stainless steel.

## Patentansprüche

1. Automatischer Brotbackautomat, umfassend:
einen Körper (1);
ein Heizgehäuse (3) mit einem Boden und einer zylindrischen Form, wobei das Heizgehäuse (3) innerhalb des Körpers (1) angeordnet ist und eine Heizkammer (1A) definiert;
einen Knetbehälter (6), der innerhalb der Heizkammer (1A) zur Aufnahme von Zutaten angeordnet ist;
eine Heizvorrichtung (8), die an einem unteren Teil der Heizkammer (1A) zum Beheizen des Knetbehälters (6) angeordnet ist;
ein Knetpaddel (7), um durch Drehung die Zutaten in dem Knetbehälter (6) zu rühren;
eine Antriebseinheit zum Drehen des Knetpaddels (7); und
eine Deckelanordnung (4) mit
einem äußeren Deckel (41), der nach außen freiliegt,
eine Wärmeisolationsplatte (42), die in der Draufsicht größere Außenabmessungen als der Knetbehälter (6) hat und innerhalb des äußeren Deckels (41) angeordnet ist, und
einen inneren Deckel (43), der ein höheres Wärmereflexionsvermögen als das Wärmereflexionsvermögen der Wärmeisolationsplatte (42) aufweist und innerhalb der Wärmeisolationsplatte (42) angeordnet ist,
wobei die Deckelanordnung (4) eine obere Öffnung des Heizungsgehäuses (3) abdeckt,
**gekennzeichnet durch**
eine äußere Luftschicht (S1), die zwischen der Wärmeisolationsplatte (42) und dem äußeren Deckel (41) vorgesehen ist,
eine innere Luftschicht (S2), die zwischen dem inneren Deckel (43) und der Wärmeisolationsplatte (42) vorgesehen ist,
wobei die innere Luftschicht (S2) hermetisch abgedichtet ist, und
eine Verbindungsöffnung (3A), die einen Raum innerhalb des Körpers (1) und zudem außerhalb des Heizungsgehäuses (3) mit der äußeren Luftschicht (S1) an einem Abschnitt kommunizierend verbindet, der in einer ebenen Ansicht außerhalb der oberen Öffnung des Heizungsgehäuses (3) liegt.

2. Brotbackautomat nach Anspruch 1, wobei die Deckelanordnung (4) einen Dampfzylinder (44) zur Abgabe von Dampf innerhalb der Heizkammer (1A) an die Außenseite des Körpers (1) aufweist, wobei der Dampfzylinder (44) einen Luftauslass (44E) zur Abgabe von Luft in der äußeren Luftschicht (S1) an die Außenseite aufweist.

3. Brotbackautomat nach Anspruch 2, wobei der Dampfzylinder (44) in einer Position vorgesehen ist, die in Richtung eines Außenumfangs der oberen Öffnung des Heizgehäuses (3) in einer ebenen Ansicht abweicht.

4. Brotbackautomat nach Anspruch 1, wobei der innere Deckel (43) entweder direkt oder indirekt an dem äußeren Deckel (41) befestigt ist.

5. Brotbackautomat nach Anspruch 1, wobei der innere Deckel (43) abnehmbar am äußeren Deckel (41) angebracht ist.

6. Brotbackautomat nach Anspruch 1, wobei der innere Deckel (43) ein metallisches Material umfasst, dessen innere Oberfläche spiegelflächenbehandelt ist.

7. Brotbackautomat nach Anspruch 1, wobei die Wärmeisolationsplatte (42) eine plattierte Stahlplatte aufweist und der innere Deckel (43) rostfreien Stahl aufweist.

## Revendications

1. Machine à pain automatique comprenant :
un corps (1) ;
une boîte de chauffe (3) ayant une forme cylindrique à fond, la boîte de chauffe (3) étant disposée à l'intérieur du corps (1) et définissant une chambre de chauffe (1A) ;
un récipient de pétrissage (6) disposé à l'intérieur de la chambre de chauffe (1A) pour contenir les ingrédients ;
un élément chauffant (8) disposé dans la partie inférieure de la chambre de chauffe (1A) pour chauffer le récipient de pétrissage (6) ;
une palette de pétrissage (7) pour remuer les ingrédients en tournant dans le récipient de pétrissage (6) ;
une unité d'entraînement pour faire tourner la palette de pétrissage (7) ; et
un couvercle équipé (4) comprenant :
un couvercle extérieur (41) exposé à l'extérieur,
une plaque d'isolation thermique (42) ayant des dimensions extérieures supérieures à celles de la cuve de pétrissage (6) en vue plane et disposée à l'intérieur du couvercle extérieur (41), et
un couvercle intérieur (43) ayant une réflectivité thermique supérieure à la réflectivité thermique de la plaque d'isolation thermique (42) et disposé à l'intérieur de la plaque d'isolation thermique (42),
dans lequel le couvercle équipé (4) couvre une ouverture supérieure du boîtier de chauffe (3),
**caractérisé par**
une couche d'air extérieure (S1) placée entre la plaque d'isolation thermique (42) et le couvercle extérieur (41),
une couche d'air intérieure (S2) située entre le couvercle intérieur (43) et la plaque d'isolation thermique (42),
la couche d'air interne (S2) étant hermétiquement fermée, et
un trou de communication (3A) reliant de manière communicative un espace à l'intérieur du corps (1) et, en outre, à l'extérieur du boîtier de chauffe (3) avec la couche d'air extérieure (S1), à un endroit situé à l'extérieur de l'ouverture supérieure du boîtier de chauffe (3), dans une vue en plan.

2. Machine à pain automatique selon la revendication 1, dans laquelle le couvercle équipé (4) comporte un cylindre à vapeur (44) pour évacuer la vapeur à l'intérieur de la chambre de chauffe (1A) vers l'extérieur du corps (1), le cylindre à vapeur (44) comportant une sortie d'air (44E) pour évacuer l'air dans la couche d'air extérieure (S1) vers l'extérieur.

3. Machine à pain automatique selon la revendication 2, dans laquelle le cylindre à vapeur (44) est prévu à une position déviée vers une périphérie extérieure de l'ouverture supérieure de la boîte de chauffe (3) dans une vue en plan.

4. Machine à pain automatique selon la revendication 1, dans laquelle le couvercle intérieur (43) est fixé au couvercle extérieur (41) directement ou indirectement.

5. Machine à pain automatique selon la revendication 1, dans laquelle le couvercle intérieur (43) est fixé de manière amovible au couvercle extérieur (41).

6. Machine à pain automatique selon la revendication 1, dans laquelle le couvercle intérieur (43) comprend un matériau métallique dont la surface intérieure est traitée en surface miroir.

7. Machine à pain automatique selon la revendication 1, dans laquelle la plaque d'isolation thermique (42) comprend une plaque d'acier plaqué, et le couvercle intérieur (43) comprend de l'acier inoxydable.
